**Europäisches Patentamt**

**European Patent Office**

**Office européen des brevets**

(11) Veröffentlichungsnummer : **0 414 002 B1**

# (12) EUROPÄISCHE PATENTSCHRIFT

(45) Veröffentlichungstag der Patentschrift :
**16.12.92 Patentblatt 92/51**

(51) Int. Cl.⁵ : **B23K 3/02**

(21) Anmeldenummer : **90114717.3**

(22) Anmeldetag : **31.07.90**

(54) **Lötwerkzeug.**

(30) Priorität : **22.08.89 DE 8910049 U**

(43) Veröffentlichungstag der Anmeldung :
**27.02.91 Patentblatt 91/09**

(45) Bekanntmachung des Hinweises auf die
Patenterteilung :
**16.12.92 Patentblatt 92/51**

(84) Benannte Vertragsstaaten :
**AT BE CH DE DK ES FR GB GR IT LI LU NL SE**

(56) Entgegenhaltungen :
**DE-A- 2 412 060**
**FR-A- 1 524 160**

(73) Patentinhaber : **COOPER INDUSTRIES, INC.**
**First City Tower Suite 4000 P.O. Box 4446**
**Houston Texas 77210 (US)**

(72) Erfinder : **Eisele,Ernst**
**Beethovenweg 1**
**W-7121 Walheim (DE)**
Erfinder : **Eisele,Fritz**
**Rathausstrasse 10/1**
**W-7121 Hessigheim (DE)**

(74) Vertreter : **Feldkamp, Rainer, Dipl.-Ing.**
**Patentanwälte Wallach, Koch, Dr. Haibach,**
**Feldkamp et al**
**P.O. Box 121120**
**W-8000 München 12 (DE)**

**Beschreibung**

Die Erfindung bezieht sich auf ein Lötwerkzeug mit einem Handgriff und mit einem am vorderen Ende des Handgriffes befestigten stab- oder rohrförmigem Heizelement, auf dessen freies Ende eine Lötspitze aufsteckbar ist, die mit einer Bohrung zur Aufnahme des freien Endes des Heizelementes versehen und die an dem Handgriff bzw. dem Heizelement mit Hilfe einer Befestigungshülse festlegbar ist, die an ihrem dem Handgriff zugewandten Ende eine Überwurfmutter zur Befestigung auf einem Gewindeansatz des Handgriffes aufweist.

Ein derartiges Lötwerkzeug ist unter anderem beispielsweise in dem DE-U-85 08 482 beschrieben. Bei einem derartigen Lötwerkzeug wird die Lötspitze durch das Innere der Befestigungshülse hindurchgeschoben oder diese Befestigungshülse wird auf die auf das stab- oder rohrförmige Heizelement aufgesteckte Lötspitze aufgeschoben, wobei das vordere Ende der Befestigungshülse über die Lötspitze greift und mit einem Befestigungswulst an der Lötspitze zusammenwirkt, um diese gegen das rohr- oder stabförmige Heizelement festzuspannen. Die Befestigungshülse selbst wird mit einer Art von Überwurfmutter oder dergleichen an einem Gewindeansatz am vorderen Ende des Handgriffes bzw. am hinteren Ende des Heizelementes befestigt. Um auch die Verwendung von gebogenen Lötspitzen zu ermöglichen, wird die Befestigungshülse mit einer langgestreckten Aussparung am Außenumfang versehen, durch die hindurch das zum Löten dienende freie Ende der Lötspitze und der Körper der Lötspitze einschiebbar ist, worauf die Lötspitze in die endgültige Position im Inneren der Überwurfhülse verschwenkt werden kann. Die Lötspitze und die Befestigungshülse können dann auf das Heizelement aufgeschoben und festgespannt werden. Diese Art der Ausgestaltung der Befestigungshülse ermöglicht jedoch lediglich die Befestigung von Lötspitzen, deren maximaler Außendurchmesser kleiner als der Innendurchmesser der Befestigungshülse ist. Weiterhin ist die Handhabung derartiger Befestigungshülsen beim Einschieben der Lötspitzen in vielen Fällen umständlich, insbesondere dann, wenn sowohl die Lötspitze als auch die Befestigungshülse warm sind.

Aus der DE-A1-24 12 060 ist weiterhin ein Lötwerkzeug bekannt, dessen Handgriff an seinem vorderen Ende einen Stutzen trägt, in den eine mit einem eigenen Heizelement versehene Lötspitze einsteckbar ist, wobei diese Lötspitze mitsamt dem Heizelement durch einen Bajonettverschluß in der Hülse festgelegt und über einen federnden Kontakt mechanisch verriegelt und in elektrische Verbindung mit einer Stromversorgung gebracht werden kann. Eine getrennte Befestigungshülse ist hierbei nicht vorgesehen.

Der Erfindung liegt die Aufgabe zugrunde, ein Lötwerkzeug der eingangs genannten Art zu schaffen, bei dem trotz der Verwendung einer Befestigungshülse Lötspitzen beliebiger Form und Außenabmessungen verwendet werden können.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Befestigungshülse bzw. der Lötspitze ist ein Hindurchschieben der Lötspitze durch die Befestigungshülse nicht mehr erforderlich, sondern die Befestigungshülse und die Lötspitze werden mit Hilfe der an den einander zugewandten Enden der Befestigungshülse und der Lötspitze ausgebildeten Dreheingriffseinrichtungen miteinander verbunden und verriegelt, wobei diese Verriegelung bei einer Verdrehung der Befestigungshülse gegenüber der Lötspitze erzielt wird.

Die Dreheingriffseinrichtungen können nach Art eines Bajonettverschlusses ausgebildet sein und Rastvorsprünge und Rastnuten an den aneinander zu befestigenden Teilen einschließen.

Hierbei kann die Lötspitze sowohl in das freie Ende der Befestigungshülse eingesteckt werden als auch diese übergreifen, wobei entsprechend die Eingriffseinrichtungen der Befestigungshülse am Innenumfang bzw. an deren Außenumfang angeordnet sind.

Die Rastnut weist in jedem Fall einen sich axial erstreckenden Abschnitt und einen sich in Umfangsrichtung erstreckenden Abschnitt auf, der ausgehend von dem axialen Abschnitt in einer derartigen Richtung gerichtet ist, daß sich beim Festziehen der Befestigungshülse ein Eingriff des Rastvorsprunges in den sich in Umfangsrichtung erstreckenden Abschnitt der Nut ergibt. Die Rastnut kann dabei an der Lötspitze ausgebildet sein, wobei in diesem Fall die Befestigungshülse den Rastvorsprung trägt, oder die Rastnut kann an der Befestigungshülse ausgebildet sein, während die Lötspitze den Rastvorsprung trägt.

Vorzugsweise sind jeweils diametral gegenüberliegende Rastnuten und Rastvorsprünge an den beiden zu verbindenden Teilen vorgesehen. Es ist jedoch auch eine andere Zahl von Rastvorsprüngen bzw. Rastnuten möglich.

Ein Ausführungsbeispiel der Erfindung wird im folgenden anhand der Zeichnung näher erläutert.

In der Zeichnung zeigen:

Fig. 1 eine teilweise geschnittene Ansicht eines Lötwerkzeuges mit einer Ausführungsform der Befestigungshülse bzw. der Lötspitze,

Fig. 2 eine perspektivische Ansicht des freien Endes der Befestigungshülse und der damit zusammenwirkenden Lötspitze,

Fig. 3 eine teilweise geschnittene Ansicht der Ausführungsform der Befestigungshülse,

Fig. 4 und 5 eine Teilansicht des Befestigungsabschnittes der Befestigungshülse, wobei Fig. 4 eine Seitenansicht und Fig. 5 eine Draufsicht von oben auf den Befestigungsabschnitt zeigt,

Fig. 6 eine teilweise geschnittene Seitenansicht einer Ausführungsform der Lötspitze,

Fig. 7 eine Ansicht des hinteren Endes der Lötspitze, die die Rastnut deutlicher erkennen läßt.

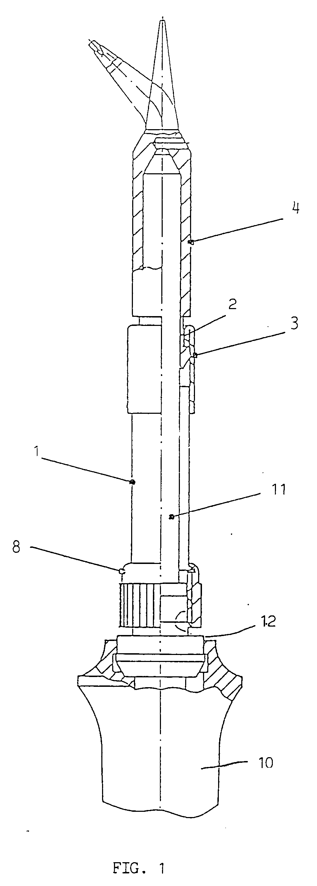

In Fig. 1 ist eine Ausführungsform des Lötwerkzeuges mit einem nur teilweise dargestellten vorderen Ende des Handgriffes (10) gezeigt, an dem ein stab- oder rohrförmiger Heizkörper (11) befestigt ist, auf dessen vorderes Ende eine Lötspitze (4) aufgeschoben ist. Die Lötspitze (4) wird mit Hilfe einer Befestigungshülse (1) an dem Handgriff (10) bzw. dem Heizkörper (11) festgelegt, wobei die Befestigungshülse mit Hilfe einer Überwurfmutter (8) an einem ein Außengewinde (12) aufweisenden Befestigungsteil des Handgriffes bzw. des Heizkörpers (11) befestigt wird.

Zwischen der Befestigungshülse (1) und der Lötspitze (4) sind Dreheingriffseinrichtungen ausgebildet, die im folgenden noch näher erläutert werden und die bei einer Relativdrehung zwischen der Lötspitze (4) und der Befestigungshülse (1) miteinander in Eingriff gebracht werden. Diese Relativdrehung, die zu einer Verriegelung der Teile miteinander führt, erfolgt vorzugsweise in Befestigungsrichtung der Befestigungshülse (1), das heißt in einer Richtung, in der die Überwurfmutter auf dem Außengewinde (12) festgezogen wird.

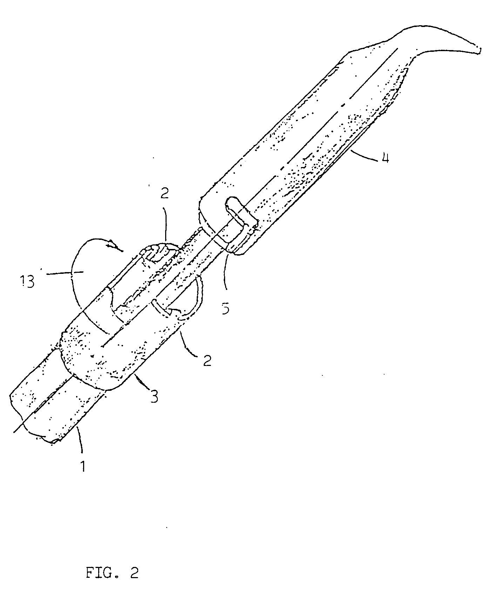

Wie dies insbesondere aus der perspektivischen Darstellung der Fig 2 zu erkennen ist, weist bei der dargestellten Ausführungsform die Befestigungshülse (1) an ihrem freien Ende Rastvorsprünge (2) auf die an einer Rasthülse (3) ausgebildet sind, wobei sich die Rastvorsprünge (2) diametral gegenüberliegend im Inneren des freien Endes der Rasthülse (3) erstrecken.

Die Lötspitze (4) weist eine Rastnut (5) auf, die gemäß Fig. 7 einen sich in Axialrichtung erstreckenden Abschnitt (5b) und einen sich in Umfangsrichtung erstreckenden Abschnitt (5a) aufweist, der von dem sich in Axialrichtung erstreckenden Abschnitt (5b) ausgeht und sich in Richtung der Festziehdrehung der Befestigungshülse (1) erstreckt, die durch den Pfeil (13) in Fig. 2 angedeutet ist.

Selbstverständlich könnten die in Fig. 2 erkennbaren Dreheingriffseinrichtungen auch in umgekehrter Weise ausgebildet sein, das heißt die Rasthülse (3) könnte eine Rastnut aufweisen, während die Lötspitze (4) damit zusammenwirkende Rastvorsprünge aufweist.

Weiterhin ist, obwohl in Fig. 2 der Fall eines Einschiebens der Lötspitze (4) in die Rasthülse (3) gezeigt ist, auch der umgekehrte Fall denkbar, bei dem die Dreheingriffseinrichtungen am Außenumfang der Rasthülse bzw. am Innenumfang der Lötspitze ausgebildet sind.

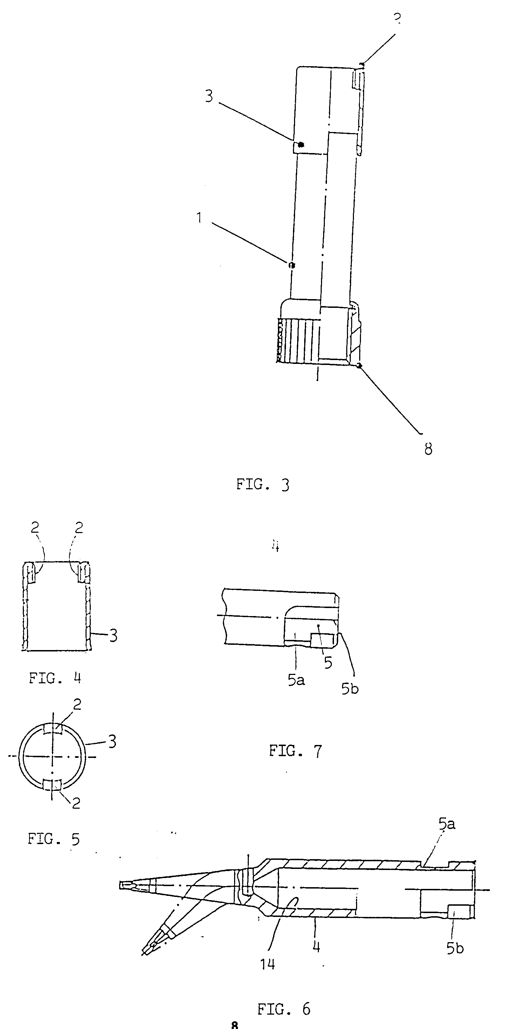

In Fig. 3 ist die Befestigungshülse (1) einzeln dargestellt, um Einzelheiten klarer erkennbar zu machen. Wie aus Fig. 3 zu erkennen ist, ist die Befestigungshülse (1) mit Hilfe einer Umbördelung in der Überwurfmutter (8) drehbar, jedoch in Axialrichtung starr befestigt und trägt an ihrer der Lötspitze zugewandten Seite eine aufgesetzte Rasthülse, die getrennt hergestellt werden kann und mit zwei Rastvorsprüngen in Form von in das Innere der Befestigungshülse (1) umgebogenen Laschen (2) versehen ist.

Diese Rasthülse ist in den Fig. 4 und 5 einzeln dargestellt. Die getrennte Herstellung der Rasthülse (3) und der Befestigungshülse (1) ermöglicht eine vereinfachte Fertigung.

Die Fig. 6 und 7 zeigen Einzelheiten der Lötspitze (4), die sowohl eine gerade Spitze (mit ausgezogenen Linien dargestellt) als auch eine abgebogene Spitze (mit strichpunktierten Linien dargestellt) aufweisen kann. Die Lötspitze (4) weist eine Innenbohrung (14) zur Aufnahme des freien Endes des Heizkörpers (11) auf und sie ist an ihrem hinteren Ende mit der bereits erwähnten Rastnut (5) versehen, die gemäß Fig. 7 einen sich in Umfangsrichtung erstreckenden Abschnitt (5a) bzw. einen sich in Axialrichtung erstreckenden Abschnitt (5b) aufweist, die ineinander übergehen.

Unabhängig davon, ob das hintere Ende der Lötspitze die Befestigungshülse (1) übergreift oder in diese eingesteckt ist, ergeben sich keinerlei Beschränkungen hinsichtlich der Formgebung und der Abmessungen der Lötspitze aufgrund der Form und Abmessungen der Befestigungshülse, so daß die beschriebene Befestigungshülse mit einer Vielzahl von Formen und Abmessungen von Lötspitzen verwendbar ist.

## Patentansprüche

1. Lötwerkzeug mit einem Handgriff (10) und mit einem am vorderen Ende des Handgriffes befestigten stab- oder rohrförmigen Heizelement (11), auf dessen freies Ende eine Lötspitze (4) aufsteckbar ist, die mit einer Bohrung zur Aufnahme des freien Endes des Heizelementes versehen und die an dem Handgriff bzw. dem Heizelement mit Hilfe einer Befestigungshülse (1) festlegbar ist, die an ihrem dem Handgriff zugewandten Ende eine Überwurfmutter (8) zur Befestigung auf einem Gewindeansatz des Handgriffes aufweist, dadurch **gekennzeichnet,** daß die Befestigungshülse (1) an ihrem der Lötspitze zugewandten vorderen Ende erste Dreheingriffseinrichtungen (2,3) aufweist, die mit zweiten, am hinteren Ende der Lötspitze (4) angeordneten Dreheingriffseinrichtungen (5) bei einer Relativdrehung zwischen Befestigungshülse (1) und Lötspitze (4) verriegelbar sind, daß die Dreheingriffseinrichtungen (2,3,5) mindestens einen in Radialrichtung vorspringenden Rastvorsprung (2) bzw. mindestens eine mit dem Rastvorsprung zusammenwirkende Nut (5) einschließen, die sich zunächst in axialer und dann in Umfangsrichtung der Lötspitze (4) erstreckt, und daß sich der in Umfangsrichtung erstreckende Abschnitt (5a) der Rastnut (5) der Lötspitze (4) von dem sich in Axialrichtung erstreckenden Abschnitt (5b) in einer derartigen Richtung erstreckt, daß sich beim Festziehen der Befestigungshülse (1) ein Eingriff des Rastvorsprunges (2) in den sich in Umfangsrichtung erstreckenden Abschnitt (5a) der Rastnut (5) ergibt.

2. Lötwerkzeug nach Anspruch 1,
dadurch **gekennzeichnet**, daß die ersten Dreheingriffseinrichtungen (2,3) der Befestigungshülse (1) den mindestens einen in Radialrichtung vorspringenden Rastvorsprung (2) einschließen und daß die zweiten Dreheingriffseinrichtungen der Lötspitze (4) durch die mindestens eine mit dem Rastvorsprung zusammenwirkende Nut (5) gebildet sind, die sich vom hinteren Ende der Lötspitze (4) aus zunächst in axialer und dann in Umfangsrichtung der Lötspitze (4) erstreckt.

3. Lötwerkzeug nach Anspruch 2,
dadurch **gekennzeichnet**, daß die Befestigungshülse (1) rohrförmig ausgebildet ist und der mindestens eine Rastvorsprung (2) sich radial nach innen am Innenumfang der Befestigungshülse (1) erstreckt, während die Lötspitze (4) die mindestens eine Rastnut (5) an ihrem Außenumfang aufweist.

4. Lötwerkzeug nach einem der Ansprüche 2 oder 3,
dadurch **gekennzeichnet**, daß zwei diametral gegenüberliegende Rastvorsprünge (2) bzw. Rastnuten (5) an der Befestigungshülse (1) bzw. der Lötspitze (4) vorgesehen sind.

5. Lötwerkzeug nach einem der vorhergehenden Ansprüche,
dadurch **gekennzeichnet**, daß die Befestigungshülse (1) die Form eines Rohres aufweist, auf dessen der Lötspitze (4) zugewandten Ende eine die Rastvorsprünge tragende Rasthülse (3) befestigt ist.

## Claims

1. Soldering tool with a handle (10) and with a rod or pipe shaped heating element (11) attached to the front end of the handle, on the free end of which a soldering bit (4) may be fixed, which has a bore for attaching the free end of the heating element and which can be attached to the handle or heating element using a fixing sleeve (1), which has a union nut (8) on the end pointing towards the handle for fixing to a screw thread on the handle,
**characterized** by the fact that, on its front end pointing towards the soldering bit, the fixing sleeve (1) has primary rotation engaging devices (2,3) which may be connected to secondary rotation engaging devices (5) positioned at the rear end of the soldering bit (4) with a relative rotation between the fixing sleeve (1) and the soldering bit (4), by the fact that the rotation engaging devices (2,3,5) include at least one radial stop projection (2) extending in a radial direction or at least one groove (5), acting with the stop projection, which extends first axially and then circumferentially in relation to the soldering bit (4), and by the fact that the circumferentially extending section (5a) of the stop groove (5) of the soldering bit (4) extends in such a direction from the axially extending section (5b) that when the fixing sleeve (1) is tightened the stop projection (2) engages at the circumferentially extending section (5a) of the stop groove (5).

2. Soldering tool in accordance with claim 1,
**characterized** by the fact that the fixing sleeve's (1) primary rotation engaging devices (2,3) include at least one radial stop projection (2) extending in a radial direction and that the soldering bit's (4) secondary rotation engaging devices are formed by at least one groove (5), acting with the stop projection, which extends from the rear end of the soldering bit (4), first axially and then circumferentially in relation to the soldering bit (4).

3. Soldering tool in accordance with claim 2,
**characterized** by the fact that the fixing sleeve (1) is pipe shaped and at least one stop projection (2) extends radially inwards on the inner circumference of the fixing sleeve (1), while the soldering bit (4) has at least one stop groove (5) on its outer circumference.

4. Soldering tool in accordance with claim 2 or 3,
**characterized** by the fact that there are two diametrically opposed stop projections (2) or stop grooves (5) on the fixing sleeve (1) or the soldering bit (4).

5. Soldering tool in accordance with one of the above claims,
**characterized** by the fact that the fixing sleeve (1) is pipe shaped and has, fixed on the end pointing towards the soldering bit (4), a stop sleeve (3) which takes the stop projections.

## Revendications

1. Outil de soudage muni d'une poignée (10) et d'un élément à chauffer (11) de forme tubulaire ou en forme de tige, fixé à l'extrémité avant de la poignée, à l'extrémité libre duquel peut venir s'enficher une panne de fer à souder (4), qui est munie d'un alésage dans lequel peut venir se loger l'extrémité libre de l'élément à chauffer et qui peut venir se fixer à la poignée ou à l'élément à chauffer à l'aide d'un manchon de fixation (1) qui présente, à son extrémité tournée vers la poignée, un écrou d'accouplement (8) pour la fixation à un prolongement fileté de la poignée, caractérisé en ce que le manchon de fixation (1) présente à son extrémité avant tournée vers la panne de fer à souder, des premiers mécanismes d'engrènement par rotation (2, 3) qui peuvent être verrouillés avec des seconds mécanismes d'engrènement par rotation (5) disposés sur l'extrémité arrière de la panne de fer à souder (4) en procédant à une rotation relative du manchon de fixation (1) et de la panne de fer à souder (4), en ce que les mécanismes d'engrènement par rotation (2, 3, 5) englobent au moins une saillie d'encliquetage (2) faisant saillie en direction radiale ou au moins une rainure d'encliquetage (5) coopérant avec la saillie d'encliquetage, qui s'étend d'abord en direction axiale et ensuite en direction périphérique de la panne de fer à souder (4), et en ce que la section (5a) de la rainure d'encliquetage (5) de la panne de fer à souder (4) s'étendant en direction périphérique, s'étend, à partir de la section (5b) s'étendant en direction axiale, dans une direction telle que, lors du blocage du manchon de fixation (1) on obtient un engrènement de la saillie d'encliquetage (2) dans la section (5a) de la rainure d'encliquetage (5) s'étendant en direction périphérique.

2. Outil de soudage selon la revendication 1, caractérisé en ce que les premiers mécanismes d'engrènement par rotation (2, 3) du manchon de fixation (1) englobent la ou les saillies d'encliquetage (2) faisant saillie en direction radiale, et en ce que les seconds mécanismes d'engrènement par rotation de la panne de fer à souder (4) sont formés par la ou les rainures d'encliquetage (5) coopérant avec la saillie d'encliquetage, qui s'étend à partir de l'extrémité arrière de la panne de fer à souder (4) d'abord en direction axiale et ensuite en direction périphérique de la panne de fer à souder (4).

3. Outil de soudage selon la revendication 2, caractérisé en ce que le manchon de fixation (1) est réalisé sous forme tubulaire et la ou les saillies d'encliquetage (2) s'étendent radialement vers l'intérieur à la périphérie interne du manchon de fixation (1), tandis que la panne de fer à souder (4) présente une ou des rainures d'encliquetage (5) sur sa périphérie externe.

4. Outil de soudage selon l'une quelconque des revendications 2 ou 3, caractérisé en ce qu'on prévoit deux saillies d'encliquetage (2) ou deux rainures d'encliquetage (5) diamétralement opposées sur le manchon de fixation (1) ou sur la panne de fer à souder (4).

5. Outil de soudage selon l'une quelconque des revendications précédentes, caractérisé en ce que le manchon de fixation (1) présente la forme d'un tube sur l'extrémité tournée vers la panne de fer à souder (4) duquel est fixé un manchon d'encliquetage (3) portant les saillies d'encliquetage.

FIG. 1

FIG. 2

FIG. 3

FIG. 4

FIG. 5

FIG. 7

FIG. 6